Europäisches Patentamt

European Patent Office

Office européen des brevets

(11) Publication number: **0 089 169**
**B1**

# EUROPEAN PATENT SPECIFICATION

(45) Date of publication of patent specification: **11.06.86**

(51) Int. Cl.⁴: **D 21 C 5/02**

(21) Application number: **83301238.8**

(22) Date of filing: **08.03.83**

(54) Fibre recovery from carbonless paper broke.

(30) Priority: **12.03.82 US 357400**

(43) Date of publication of application:
**21.09.83 Bulletin 83/38**

(45) Publication of the grant of the patent:
**11.06.86 Bulletin 86/24**

(84) Designated Contracting States:
**AT BE CH DE FR GB IT LI LU NL SE**

(56) References cited:
**DE-B-2 816 148**
**GB-A- 904 279**
**US-A-3 652 383**

**TAPPI, J. TECHN. ASS. PULP PAPER IND., vol.
63, no. 4, April 1980, ATLANTA, GA. (US),
"Enzymes can reduce production costs", page
19**

**TAPPI, J. TECHN. ASS. PULP PAPER IND., vol.
63, no. 11, November 1980, ATLANTA, GA.
(US), R.G. HORACEK et al.: "Principles of deink
washing", pages 135-138**

(73) Proprietor: **APPLETON PAPERS INC.**
**P.O. Box 359 825 East Wisconsin Avenue**
**Appleton Wisconsin 54912 (US)**

(72) Inventor: **Schulz, William J.**
**120 16th Street**
**Cloquet Minnesota 55720 (US)**

(74) Representative: **Roberts, Jonathan Winstanley
et al**
**The Wiggins Teape Group Limited Group
Patents Dept. Butler's Court
Beaconsfield Buckinghamshire HP9 1RT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a method of recovering fibres from broke of pressure-sensitive carbonless copying paper (referred to herein for brevity as 'carbonless paper'). The method is especially useful where synthetic walled microcapsules, i.e. microcapsules produced by polymerization methods utilizing monomers or initial condensates of synthetic resins, are used in the paper.

Pressure-sensitive mark-forming units and systems typically comprise colour former components in a solution which is encapsulated in pressure-rupturable microcapsules coated on a supporting sheet material and particulate colour developer components coated on a supporting sheet material, the sheets being arranged to place both components in proximate relation to each other, so that, upon the application of marking pressure to a sheet carrying the microcapsules, the microcapsules are ruptured and release the solution of colour former into contact with the colour developer components producing a mark or colour, corresponding to the applied pressure. Such copying papers are described in, for example, U.S. Patent Nos. 2,712,507; 2,730,456; 2,730,457; 3,455,721; 3,672,935; 4,001,140; 4,087,376; 4,089,802 and 4,100,103.

Conventional paper broke can be defibrated comparatively easily with various defibrating machines and optionally further treated to yield a regenerated pulp which can be utilized alone or in admixture with other furnishes to produce comparatively high quality paper.

When carbonless paper broke is defibrated, microcapsules can be ruptured during defibration, releasing colour former which reacts with any colour developer to produce colour. This results in stained pulp which cannot be subsequently used as a raw material for high quality paper. Because of this carbonless paper broke i.e. edge trimmings and damaged paper resulting from the production of carbonless paper, has had limited acceptance and consequently a low price in the recycled paper market.

Various techniques have been employed to attempt to overcome these disadvantages resulting from carbonless paper broke. U.S. Patent No. 3,933,578 describes fibre recovery from such broke involving defibration using an alkaline solution containing a surface active agent resulting in rupture of microcapsules. Colour formation between the released colour formers and the colour developer is inhibited by the surface active agent. This method is particularly useful for carbonless paper broke in which the walls of the microcapsule used were produced by a coacervation process, such as, for example, a process using gelatin with gum arabic or carboxymethyl cellulose. Such coacervation processes are described in U.S. Patent Nos. 2,800,457; 3,041,289 and 3,533,958. Japanese Patent Disclosure (Kokai) No. 51-23302 describes a method for recovering pulp from carbonless paper broke in which the broke is defibrated in the presence of a base and the resulting pulp is separated, washed at least once and flotation treated to remove the coloured and non-coloured undesirable components.

German Offenlegungsschrift No. 2,642,319 discloses a carbonless paper broke recovery involving the use of a bleaching agent, followed by foam flotation.

U.S. Patent No. 4,264,412 describes carbonless paper broke recovery by defibrating the broke in an aqueous medium, treatment with acid to destroy the microcapsules and subsequent bleaching.

U.S. Patent No. 3,910,813 discloses a process for reclaiming both the colour former solution and the paper fibres of carbonless paper broke. The broke is shredded, extracted with a solvent capable of penetrating the microcapsule walls to give a colour-forming-solution/solvent solution, the solution is separated from the fibres and the solvent is separated from the colour former solution by distillation.

The above disclosed process for regeneration of fibres from the recovery of fibres from carbonless paper broke result in rupture of the microcapsules contained therein. The resulting colour is either inhibited by using a surface a active agent or removed by flotation, or the action of a bleaching agent.

When these prior art pulp recovery processes are applied to carbonless paper in which the walls of the microcapsules were produced by polymerization methods utilizing monomers or initial condensates of synthetic resins, such as those disclosed in U.S. Patent Nos. 4,001,140; 4,087,376; 4,089,802 and 4,100,103, a high proportion of the microcapsules go through these processes intact. The fibres in the pulp reclaimed by such processes continue to have unruptured microcapsules adhered thereto. Paper produced subsequently from such regenerated pulp is itself disadvantageously pressure-sensitive because of these intact microcapsules in the paper furnish. Normal writing or other pressures rupture these residual microcapsules releasing the colour former solution contained therein which can react with components of the paper furnish to produce undesirable colour. Thus, even though these prior art processes can be utilized to recover pulp from carbonless paper broke, subsequent use of this pulp to produce a fine paper gives a product which appears to be satisfactory, but which on subsequent application of pressure gives undesirable production of colour, revealing the unsatisfactory nature of such prior art broke recovery processes.

The present invention provides a method of recovering fibres from pressure-sensitive carbonless copying paper broke having colour former containing microcapsules, comprising the steps of:

(a) defibrating the broke in an aqueous medium without substantial rupture of the microcapsules;

(b) treating the defibrated broke with an enzyme for starch saccharification; and,

(c) separating the fibres from the non-fibrous components in a sidehill screen equipped with a washing shower.

The defibration is preferably carried out at temperatures higher than room temperature, e.g. up to about 150°F (77°C) and under pH conditions which optimize the degradation of the wet strength resins, if any, existing in the base stock of the carbonless paper broke. Some of these resins are degraded only under acidic conditions and others are degraded only under basic condition. In order to best accommodate the possibility that both types of wet strength resins are present, it is best to defibrate for a period of time under one set of conditions, such as, for example, acidic conditions in the presence of an acid pulping aid followed by adjusting the defibrating medium to basic conditions and continuing to defibrate for a period of time.

If the broke being processed is a coloured grade, bleach will usually be added after the defibration process in order to obtain white recycled fibres for unrestricted subsequent use.

Following defibration and bleaching, if any, the next step is the addition of an enzyme for saccharification of the starches present. Such enzymes typically function optimally near neutral pH and it is thus desirable that, if necessary, the pH of the defibrated (and bleached) broke is adjusted to near neutral e.g. 6.0 to 7.5, prior to addition of the enzyme. Whilst the exact mechanism of this step is not known, we believe that the enzyme effectively breaks the starch bond adhering the microcapsules to the fibres. This step, surprisingly, was found to be required in order to adequately remove microcapsules from the fibres during the process. Without this step sufficient microcapsules remain associated with the recovered fibres to render paper, produced subsequently from such regenerated pulp of limited value for the reasons previously cited.

Following the addition of the saccharifying enzyme, the fibres are separated from the microcapsules and other non-fibrous constituents in a sidehill screen equipped with a washing shower in a multi-stage arrangement such as, for example, those disclosed in U.S. Pat. Nos. 3,451,555 and 3,452,876. The product of this separation step is the regenerated fibre which is suitable for use in papermaking processes.

The following Examples are given to illustrate the invention unless otherwise noted, the percentages therein and through the application are by weight.

Examples 1 to 4

The general procedure used in the Examples for the recovery process is as follows. Carbonless paper broke was defibrated in water containing an acid repulping aid in a low shear pulper at a consistency of five to nine percent. Sulphuric acid was added to further lower the pH to 3.5 to 4.5 if necessary. A wetting agent was optionally included in the aqueous medium. Steam was added to the mixture until the temperature reached 145 to 150°F (62 to 83°C). After about one hour of agitation, the pH of the stock was increased to 8 to 9 by addition of aqueous sodium hydroxide and the agitation was continued until defibration was complete. Bleach was added to decolour the basestock dyes, if any, the stock was diluted, the pH of the stock was adjusted to 6.0 to 7.5 with sulphuric acid and the enzyme for starch saccharification was added. The stock was then fed to a sidehill screen equipped with a washing shower to separate the fibres from the undesirable non-fibrous constituents.

Using substantially the procedure described above, several experiments were performed in which fibres were recovered from carbonless paper broke. The measure of success of the recovery process was the determination of the percent removal of the microcapsules from the waste. The results of the Examples are set out in Table 1.

Pulp Aid 101 is an acidic water soluble ester material supplied by Laurel Products Corp., 2600 East Tioga St., Philadelphia, PA.

Solvox KS is calcium hypochlorite supplied by Solvox Mfg. Co., 11725 W. Fairview Avenue, Milwaukee, WI.

Vanzyme FE is an enzyme for starch saccharification supplied by R. T. Vanderbilt Co. Inc., New York, NY.

Example 5

This example of a fibre recovery process was performed on carbonless paper broke comprising capsules made according to U.S. Pat. No. 3,041,289, in the same equipment as Examples 1—4 except that no chemicals were added except Vanzyme FE at the rate of 50 ppm by wt. The percent capsule removal in this case was 83%.

Examples 1—5 show a degree of removal of microcapsules which enables the subsequent manufacture of a completely satisfactory paper furnish from the recovered fibres.

# 0 089 169

TABLE 1

| Example No. | 1 | 2 | 3 | 4 |
|---|---|---|---|---|
| Pulping aid 101 (%) | 1 | 1 | 1 | 1 |
| pH during acid defibration | 4.5 | 4.5 | 4.2 | 4.0 |
| Temp. °F (°C) | 150 (83) | 150 (83) | 150 (83) | 150 (83) |
| pH during basic defibration | 8.5 | 8.5 | 8.5 | 8.0 |
| Solvox KS (%) | 0 | 1 | 1 | 1 |
| pH after defibration | 7.0 | 7.5 | 7.0 | 7.0 |
| Vanzyme FE (ppm) | 50 | 50 | 50 | 50 |
| Capsule type* | A | A | B | B |
| % Capsule removal | 90 | 90 | 94 | 89 |

\*A—made according to US Patent No. 3041289
B—made according to US Patent No. 4001140.

## Claims

1. A method of recovering fibres from pressure-sensitive carbonless copying paper broke having colour former containing microcapsules, comprising the steps of:
(a) defibrating the broke in an aqueous medium without substantial rupture of the microcapsules;
(b) treating the defibrated broke with an enzyme for starch saccharification; and,
(c) separating the fibres from the non-fibrous components in a sidehill screen equipped with a washing shower.

2. A method as claimed in claim 1, wherein a part of the defibrating step is performed at a pH less than 5.

3. A method as claimed in claim 2, wherein a further part of the defibrating step is performed at a pH of 8.0 or greater.

4. A method as claimed in any one of claims 1 to 3 additionally comprising a step in which bleach is applied to the broke.

5. A method as claimed in claim 4, wherein the bleaching step is performed after the defibration step.

6. A method as claimed in any one of claims 1 to 5, wherein the medium is adjusted to a pH of 6.0—7.5 prior to the addition of the enzyme.

7. A method as claimed in any one of claims 1 to 6, wherein the microcapsules are produced by polymerization methods utilizing monomers or initial condensates of synthetic resins.

8. A method as claimed in claim 7, wherein the microcapsules are produced by a polymerization reaction between urea and formaldehyde.

## Patentansprüche

1. Ein Verfahren zur Rückgewinnung von druckempfindlichem kohlefreiem Durchschlag-Altpapier, welches einen Farbgeber in Mikrokapseln enthält und die folgenden Schritte umfaßt:
(a) Befreien des Altpapiers von Fasern in einem wäßrigen Medium ohne wesentliches Aufbrechen der Mikrokapseln,
(b) Behandeln des von Fasern befreiten Altpapiers mit einem Enzym zur Verzuckerung von Stärke und
(c) Abtrennen der Fasern von den nicht faserigen Komponenten in einem schrägen Sieb, das mit einer Waschberieselung versehen ist.

2. Ein Verfahren nach Anspruch 1, gekennzeichnet dadurch, daß ein Teil des Entfaserungsschrittes bei einem pH von weniger als 5 durchgeführt wird.

3. Ein Verfahren nach Anspruch 2, dadurch gekennzeichnet, daß ein weiterer Teil des Entfaserungsschrittes bei einem pH von 8 oder größer durchgeführt wird.

4. Ein Verfahren nach einem der Ansprüche 1 bis 3, dadurch gekennzeichnet, daß er zusätzlich einen Schritt umfaßt, bei welchem ein Bleichmittel zu dem Altpapier gegeben wird.

5. Ein Verfahren nach Anspruch 4, dadurch gekennzeichnet, daß das Bleichen nach dem Entfaserungsschritt durchgeführt wird.

6. Ein Verfahren nach einem der Ansprüche 1 bis 5, dadurch gekennzeichnet, daß der pH des Mediums vor Zugabe des Enzyms auf einen pH von 6 bis 7,5 eingestellt wird.

7. Ein Verfahren nach einem der Ansprüche 1 bis 6, dadurch gekennzeichnet, daß die Mikrokapseln durch Polymerisationsverfahren, die Monomere oder Anfangskondensate von synthetischen Harzen verwenden, hergestellt werden.

8. Ein Verfahren nach Anspruch 7, dadurch

4

gekennzeichnet, daß die Mikrokapseln durch eine Polymerisationsreaktion zwischen Harnstoff und Formaldehyd hergestellt werden.

## Revendications

1. Procédé de récupération de fibres à partir de cassés de fabrication de papier à copier sans carbone, sensible à la pression, possédant des microcapsules contenant un formateur de colorant, caractérisé en ce qu'il comprend les étapes consistant à:

(a) défibrer les cassés de fabrication dans un milieu aqueux sans rupture sensible des microcapsules;

(b) traiter les cassés de fabrication défibrés par une enzyme pour la saccharification de l'amidon; et

(c) séparer les fibres des composants non fibreux dans un tamis ou crible latéral équipé d'un rinceur de lavage.

2. Procédé suivant la revendication 1, caractérisé en ce qu'une partie de l'étape de défibrage se réalise à un pH inférieur à 5.

3. Procédé suivant la revendication 2, caractérisé en ce qu'une partie complémentaire de l'étape de défibrage se réalise à un pH de 8,0 et plus.

4. Procédé suivant l'une quelconque des revendications 1 à 3, caractérisé en ce qu'il comprend, au surplus, une étape au cours de laquelle on applique un agent de blanchiment aux cassés de fabrication.

5. Procédé suivant la revendication 4, caractérisé en ce que l'étape de blanchiment se réalise après l'étape de défibrage.

6. Procédé suivant l'une quelconque des revendications 1 à 5, caractérisé en ce que l'on ajuste le pH du milieu à 6,0—7,5 avant de procéder à l'addition de l'enzyme.

7. Procédé suivant l'une quelconque des revendications 1 à 6, caractérisé en ce que les microcapsules sont produites par des procédés de polymérisation faisant appel à des monomères ou à des produits de condensation initiaux de résines synthétiques.

8. Procédé suivant la revendication 7, caractérisé en ce que l'on produit les microcapsules par une réaction de polymérisation entre l'urée et le formaldéhyde.